# FASCICULE DE BREVET EUROPEEN

(11) **EP 3 887 747 B1**
(45) Date de publication et mention de la délivrance du brevet: **31.07.2024**
(21) Numéro de dépôt: 19809482.3
(22) Date de dépôt: 28.11.2019
(51) Int. Cl.: F41G 3/02, F41G 3/06, G01S 19/51, G01S 19/49, G01S 7/00, G01S 17/02

(54) **MODULE AUTONOME OPTRONIQUE DE POINTAGE DE CIBLE GEOLOCALISE POUR SYSTEME PORTABLE ET SYSTEME CORRESPONDANT**
AUTONOMES OPTRONISCHES MODUL ZUM ZEIGEN AUF EIN GEOLOKALISIERTES ZIEL FÜR EIN TRAGBARES SYSTEM UND ENTSPRECHENDES SYSTEM
AUTONOMOUS OPTRONIC MODULE FOR GEOLOCATED TARGET POINTING FOR A PORTABLE SYSTEM, AND CORRESPONDING SYSTEM

(30) Priorité: 29.11.2018 FR 1872006
(43) Date de publication de la demande: 06.10.2021
(73) Titulaire: EXAIL, 78100 Saint-Germain-en-Laye (FR)
(72) Inventeur: CREPY, Bruno, 78100 Saint-Germain-en-Laye (FR)
(74) Mandataire: Jacobacci Coralis Harle
(86) Numéro de dépôt international: PCT/EP2019/082992
(87) Numéro de publication internationale: WO 2020/109515

(56) Documents cités:
- WO-A1-2007/028826
- US-A- 4 949 089
- US-A1- 2002 111 717
- US-A1- 2007 103 673
- US-A1- 2012 059 575
- US-A1- 2018 224 244
- US-B1- 8 275 544
- DELHAYE FABRICE: "HRG by SAFRAN: The game-changing technology", 2018 IEEE INTERNATIONAL SYMPOSIUM ON INERTIAL SENSORS AND SYSTEMS (INERTIAL), IEEE, 26 March 2018 (2018-03-26), pages 1 - 4, XP033339841, DOI: 10.1109/ISISS.2018.8358163

## Description

### DOMAINE TECHNIQUE

La présente invention concerne de manière générale le domaine des appareils optroniques de mesure de position ou/et de cap de cibles par pointage. Elle concerne plus particulièrement un module autonome de pointage visuel référencé avec des capteurs de mouvement à type de centrale inertielle (INS) ou centrale de référence d'assiette et de cap (AHRS : Attitude Heading Reference System) et un récepteur de géo-positionnement par satellite, le module étant destiné à être installé sur un équipement pour former un système portable de pointage visuel de cible. Le module qui est compact et de faible poids peut être préinstallé sur l'équipement. Le module peut aussi se présenter sous forme d'un « kit » qu'il est possible d'installer sur l'équipement.

### ARRIERE-PLAN TECHNOLOGIQUE

Il existe un besoin, notamment dans un contexte de défense et de sécurité, de pointer une cible pour acquérir une ou des informations sur la position absolue et/ou relative de ladite cible.

Plusieurs systèmes de pointage existent actuellement sur le marché :
- Des systèmes composés de caméras et de chercheur de nord disposés sur un dispositif de pointage fin installés sur trépied. Ces systèmes permettent l'acquisition de cible à grande distance mais sont généralement lourds et nécessitent surtout une installation préalable car ils doivent être montés sur un trépied, ce qui prend un temps certain.
- Des équipements composés de caméras sous la forme d'une arme de poing qui permettent un fonctionnement instantané mais qui nécessitent un repositionnement régulier dans une unité de calibration comme par exemple le système IPD de la société SOFRESUD.

On connaît des documents FR3057656 A1, FR2942044 A1, FR2929700 A1, FR2758625 A1, FR2852405 A1 et CA2249474 A1 ou, encore, FR2824132 A1 concernant des systèmes de ce domaine.

On connaît également les documents US8 275 544 B1, US2018/ 224244 A1, US2012/ 059575 A1, WO2007/ 028826 A1 et US4 949 089 A.

Ces dispositifs disponibles sur le marché ne permettent pas de bénéficier simultanément des caractéristiques suivantes :
- légèreté avec une masse inférieure à cinq kilogrammes pour les moyens de pointage,
- une autonomie de navigation de plusieurs heures sans intervention ou nécessité de recalibrage,

- une disponibilité opérationnelle immédiate grâce à la portabilité du système en « bandoulière ».

### PRESENTATION DE L'INVENTION

Afin de remédier aux inconvénients précités de l'état de la technique, la présente invention propose de mettre en oeuvre, au sein d'un système portable et autonome permettant le pointage visuel d'une cible, un module comportant un capteur de mouvement, en particulier une centrale inertielle de navigation (INS) ou une centrale de référence d'assiette et de cap (AHRS) qui sont capables de déterminer la direction du nord d'une manière autonome, un récepteur de géo-positionnement par satellite, et qui sont couplés à une unité de vision.

Plus particulièrement, on propose tout d'abord selon l'invention un module autonome de pointage visuel produisant des informations sur la position d'une cible visée par un utilisateur et destiné à être installé sur un équipement portable afin de former un système portable et autonome à pointage visuel de cible, les informations sur la position de la cible étant au moins le cap de la cible.

Selon l'invention, le module comporte
- une alimentation électrique autonome,
- des circuits électroniques de pilotage, de calcul et d'interfaçage,
- un capteur de mouvements comportant une centrale inertielle de navigation, INS, ou une centrale de référence d'assiette et de cap, AHRS, comportant des gyromètres et des accéléromètres,
- un récepteur de géo-positionnement par satellite, GNSS, permettant de fournir en temps réel et en continu des données de position du récepteur, les circuits électroniques de pilotage, de calcul et d'interfaçage étant configurés pour permettre une hybridation du récepteur de géo-positionnement par satellite avec le capteur de mouvements, afin que, au moins, le capteur de mouvement puisse suppléer le récepteur de géo-positionnement par satellite au cas où ce dernier ne pourrait pas fournir de données de position,
- une unité optronique comportant un ensemble de capteurs optiques de type lunette et/ou caméras permettant de pointer visuellement le module sur la cible visée, et un télémètre permettant de déterminer la distance entre la cible et le module, caractérisé en ce que le capteur de mouvements comporte des gyromètres et des accéléromètres, et en ce que 1 les gyromètres sont à résonance hémisphérique, HRG, permettant de déterminer la direction du nord de façon autonome et dans lequel le module comporte en outre des moyens de repositionnement grâce à des mesures angulaires ou de triangulation de plusieurs points de références visibles de l'unité optronique et ayant des positions connues dans le cas où le récepteur de géo-positionnement par satellite, GNSS, ne permettrait pas de fournir la position du module.

Dans ce document, les termes « direction » et « cap » pour la cible sont considérés synonymes.

D'autres caractéristiques non limitatives et avantageuses du module conforme à l'invention, prises individuellement ou selon toutes les combinaisons techniquement possibles, sont les suivantes :
- l'interfaçage s'effectue avec notamment l'utilisateur,
- les circuits électroniques de pilotage, de calcul et d'interfaçage sont configurés pour permettre une hybridation du récepteur de géo-positionnement par satellite avec le capteur de mouvements, afin qu'en outre, le récepteur de géo-positionnement par satellite puisse corriger les possibles dérives du capteur de mouvements,
- les informations sur la position de la cible sont absolues ou relatives, notamment en fonction de la nature des capteurs mis en oeuvre et/ou de calculs effectués dans les circuits électroniques de pilotage, de calcul et d'interfaçage,
- les informations sur la position de la cible sont relatives au module,
- les informations sur la position de la cible sont sélectionnées parmi une ou plusieurs des informations suivantes : le cap de la cible, la distance de la cible, les coordonnées de la cible, les coordonnées du module,
- les informations sur la position de la cible sont à la fois le cap de la cible et la distance de la cible et les coordonnées de la cible et les coordonnées du module,
- le module produit en outre des informations sur la position du module dont notamment les coordonnées du module,
- les informations sur la position de la cible visée par l'utilisateur sont calculées en fonction de la détection par le module d'au moins une condition déterminée,
- les conditions déterminées sont choisies parmi : une action de l'utilisateur, notamment la pression sur un bouton poussoir de commande de calcul, une immobilisation du module, une réduction de la vitesse de déplacement du module, une mesure de distance par le télémètre inférieure ou égale à une valeur déterminée, une reconnaissance de forme sur des images de caméra(s)...
- les informations sur la position de la cible visée par l'utilisateur sont calculées à la demande, l'utilisateur devant effectuer une action pour obtenir les informations sur la position de la cible visée,
- le capteur de mouvements est « gyrocompassant », c'est-à-dire qu'il est capable de déterminer la direction du nord de façon autonome,
- le nord est le nord géographique,
- la centrale inertielle de navigation est « gyrocompassante », c'est-à-dire qu'elle est capable de déterminer la direction du nord de façon autonome,
- la centrale de référence d'assiette et de cap est « gyrocompassante », c'est-à-dire qu'elle est capable de déterminer la direction du nord de façon autonome,
- le capteur de mouvements comporte trois gyromètres non coplanaires et, en outre, trois accéléromètres non coplanaires,
- le capteur de mouvements à gyromètres comporte des gyromètres à fibre optique, FOG, ou à base de laser en anneau, LRG, ou à résonnance hémisphérique, HRG, ou toute autre technologie gyrocompassante c'est-à-dire capable de déterminer la direction du nord de façon autonome,
- le capteur de mouvements est choisi parmi les centrales inertielles de navigation, INS, ou les centrales de référence d'assiette et de cap, AHRS, qui peuvent être de type FOG (Fiber Optical Gyroscope) ou LRG (Ring Laser Gyroscope) ou HRG (Hemispherical Resonator Gyroscope) ou toute autre technologie gyrocompassante, c'est-à-dire capable de déterminer la direction du nord de façon autonome,
- la centrale inertielle de navigation, INS, est hybridée avec le récepteur de géo-positionnement par satellite, GNSS, notamment GPS,
- les circuits électroniques de pilotage, de calcul et d'interfaçage comportent au moins un filtre de Kalman formant un filtre de positionnement dynamique,
- la centrale inertielle de navigation, INS, comporte au moins un filtre de Kalman formant un filtre de positionnement dynamique,
- la centrale de référence d'assiette et de cap, AHRS, comporte au moins un filtre de Kalman formant un filtre de positionnement dynamique,
- Le filtre de positionnement dynamique de la centrale inertielle de navigation, INS, utilise, d'une part, les mesures/observations des gyromètres et des accéléromètres pour calculer le cap et la position du module et, d'autre part, des données de position du récepteur GNSS afin de limiter la propagation d'erreur lors de l'intégrations des mesures/observations des accéléromètres, ladite intégration des mesures/observations des accéléromètres étant une double intégration, et/ou lors de l'intégration des mesures/observations des gyromètres, ladite intégration des mesures/observations des gyromètres étant une simple intégration,
- la centrale inertielle de navigation, INS, est en outre hybridée avec un podomètre afin de limiter la dérive en position du module en cas d'absence de réception de signaux du récepteur de géo-positionnement par satellite, GNSS,
- la centrale de référence d'assiette et de cap, AHRS, est en outre hybridée avec un podomètre afin de limiter la dérive en position du module en cas d'absence de réception de signaux du récepteur de géo-positionnement par satellite, GNSS,
- le podomètre fournit au capteur de mouvements des données de vitesse de déplacement du module qui sont utilisées par le filtre de Kalman de la centrale inertielle de navigation, INS, ou de la centrale de référence d'assiette et de cap, AHRS, pour limiter les dérives du capteur de mouvements,
- le module comporte en outre un dispositif de fixation permettant de fixer le module sur l'équipement portable et le dispositif de fixation est configuré pour se fixer à un rail de fixation de l'équipement,
- le rail de fixation de l'équipement est un rail Picatinny qui répond aux normes de rail MIL-STD-1913 or STANAG 2324,
- le télémètre est choisi parmi les télémètres laser à fibre, les télémètres laser à diodes ou des télémètres laser solides,
- l'unité optronique comporte un ou plusieurs des éléments suivants :
   une lunette de visée « directe optique »,
   une caméra sensible dans le visible du spectre,
   une caméra intensifiée,
   une caméra spécifiquement sensible à l'infra-rouge du spectre,
   un télémètre,
   un télémètre à base de laser,
   un pointeur laser,
- les capteurs optiques de type lunette sont à vision directe par l'utilisateur,
- les capteurs optiques de type caméra produisent des images,
- les images des capteurs optiques de type caméra sont affichées sur au moins un afficheur,
- le module comporte une lunette optique en vision directe par l'utilisateur ou au moins une caméra de visualisation de la cible produisant des images, ladite au moins une caméra permettant une visualisation de la cible au moins de jour,
- la au moins une caméra permet en outre une visualisation de la cible de nuit,
- le module comporte :
   soit deux caméras, une première pour visualisation de cible de jour et une seconde pour visualisation de cible de nuit, la seconde caméra étant choisie parmi les caméra à intensification de lumière ou les caméras sensibles aux seuls infrarouges,
   soit une seule caméra pour visualisation de cible de jour combinée à un illuminateur de cible permettant d'éclairer la cible la nuit afin de permettre sa visualisation,
   soit une seule caméra sensible aux seuls infrarouges pour visualisation de cible de jour et de nuit,
- l'illuminateur de cible est choisi parmi les diodes électroluminescentes et les diodes lasers,
- l'illuminateur de cible illumine la cible dans le visible pour l'oeil humain,
- l'illuminateur de cible illumine la cible dans l'infrarouge, non visible pour l'oeil humain,
- le module et les circuits électroniques du module sont configurés afin de calculer au moins une information sur la position de la cible visée choisie parmi : le cap/la direction de la cible, la distance de la cible et des coordonnées de position de la cible,
- l'afficheur est incorporé au module,
- l'afficheur est déporté à distance du module, la transmission des images entre le module et l'afficheur étant filaire ou sans fil,
- le module comporte au moins un afficheur intégré au module et/ou déporté à distance du module,
- le module comporte au moins une caméra produisant des images de la cible visée et au moins un afficheur permettant d'afficher lesdites images, ledit au moins un afficheur étant intégré au module et/ou déporté à distance du module,
- l'afficheur permet la restitution des images prises par les capteurs,
- ledit au moins un afficheur permet en outre l'affichage des coordonnées de positionnement de la cible visée,
- l'afficheur permet l'indication d'au moins une information sur la position absolue de la cible visée,
- l'afficheur permet l'indication d'au moins une information sur la position relative de la cible visée,
- l'afficheur permet l'indication d'au moins une information sur la position de la cible visée,
- l'afficheur permet l'indication au moins du cap de la cible visée,
- l'afficheur permet l'indication au moins du cap et de la distance de la cible visée,
- l'afficheur permet en outre l'indication des coordonnées de position de la cible connaissant la position du module et la mesure de distance de la cible par rapport au module par le télémètre,
- le module comporte une interface sonore permettant de générer des messages sonores audibles donnant une ou plusieurs informations sur la cible,
- les messages sonores audibles sont délivrés par un haut-parleur du module,
- les messages sonores audibles sont délivrés par un écouteur à liaison filaire au module,
- les messages sonores audibles sont délivrés par un écouteur à liaison sans fil à courte distance au module,
- le module comporte un dispositif de communication de données sans fil pour transmission des informations sur la position de la cible et des images de la cible visée dans le cas où le module comporte au moins une caméra,
- le dispositif de communication de données sans fil est à courte distance,
- le dispositif de communication de données sans fil est à longue distance,
- le dispositif de communication de données sans fil est sur réseau de communication de données, notamment réseau téléphonique sans fil,
- l'afficheur déporté à distance du module, est porté par l'utilisateur sous forme de lunettes,
- l'afficheur déporté à distance du module, est un affichage type tête haute notamment sous forme d'une paire de lunettes ou d'une visière d'un casque,
- l'afficheur permet d'afficher une ou plusieurs des informations suivantes : images de la cible visée, cap de la cible visée, coordonnées de position du module, coordonnées de position de la cible, distance de la cible au module, d'autres informations,
- le module comporte un dispositif de communication filaire pour au moins transmission d'images de la cible à un afficheur à distance du module et porté par l'utilisateur,
- le module comporte un dispositif de communication sans fil à courte distance pour au moins transmission d'images de la cible à un afficheur à distance du module et porté par l'utilisateur,
- l'afficheur distinct du module et porté par l'utilisateur est un affichage type tête haute notamment sous forme d'une paire de lunettes ou d'une visière d'un casque,
- le module a un niveau d'incertitude qui est inférieur ou égal à 2 mrad rms pour la direction/cap de la cible dans le cas de l'utilisation d'une centrale inertielle de navigation avec gyromètres à fibre optique avec des bobines de 50mm et un niveau de précision pour la position correspondant à celui du récepteur de géo-positionnement par satellite, GNSS,
- le module a un niveau d'incertitude sur la distance à la cible visée qui est inférieur ou égal à 1m pour une cible située à une distance maximum de 5km,
- le module a un niveau d'incertitude sur les coordonnées de positionnement absolu de la cible visée qui est inférieur ou égal à 10m pour une cible située à une distance maximum de 2km,
- le module a un niveau d'incertitude sur les coordonnées de positionnement relatif de la cible visée par rapport au module qui est inférieur ou égal à 5m pour une cible située à une distance maximum de 2km,
- l'unité optronique est référencée par la centrale inertielle de navigation, INS, ou par la centrale de référence d'assiette et de cap, AHRS, afin que lors du pointage sur la cible, les capteurs de mouvements permettent de calculer dans les circuits électroniques de calcul au moins le cap/direction de la cible visée,
- le module permettant d'obtenir seulement la direction/cap de la cible comporte une centrale de référence d'assiette et de cap, AHRS,
- le module permettant d'obtenir seulement la direction/cap et la distance de la cible comporte une centrale de référence d'assiette et de cap, AHRS, et un télémètre,
- l'unité optronique est référencée au moins par la centrale inertielle de navigation, INS, ou par la centrale de référence d'assiette et de cap, AHRS, et le télémètre afin que lors du pointage sur la cible, les capteurs de mouvements permettent de calculer dans les circuits électroniques de calcul au moins la direction/cap de la cible et la position de la cible, lesdites centrales ayant été précédemment/préalablement repositionnée,
- le module permettant d'obtenir au moins la direction/cap de la cible et la position de la cible comporte un récepteur de géo-positionnement par satellite, GNSS, une centrale de référence d'assiette et de cap, AHRS, et un télémètre,
- le module permettant d'obtenir au moins la direction/cap de la cible et la position de la cible avec une capacité à évoluer dans un environnement où la réception du signal satellite par le récepteur de géo-positionnement par satellite, GNSS, n'est pas possible (« GNSS denied »), comporte une centrale inertielle de navigation, INS, un récepteur de géo-positionnement par satellite, GNSS, et un télémètre,
- le module permettant d'obtenir au moins la direction/cap de la cible et la position de la cible avec une capacité à évoluer dans un environnement où la réception du signal satellite par le récepteur de géo-positionnement par satellite, GNSS, n'est pas possible (« GNSS denied »), comporte une centrale inertielle de navigation, INS, et un télémètre, le capteur de mouvements nécessitant un repositionnement préalable,
- le module est configuré afin que le repositionnement du capteur de mouvements soit effectué avec un récepteur de géo-positionnement par satellite, GNSS, externe et distinct du module, notamment un récepteur de géo-positionnement par satellite, GNSS, d'un véhicule,
- le module est configuré afin que le repositionnement du capteur de mouvements soit effectué directement avec le module grâce à des mesures angulaires ou de triangulation de plusieurs points de références visibles de l'unité optronique et ayant des positions connues,
- le module a un niveau d'incertitude inférieur ou égal à 2 mrad rms pour le cap lorsque la centrale inertielle de navigation est de type FOG (Fiber Optical Gyrometer) avec des bobines de fibres optiques de 50mm) et un niveau de précision pour la position correspondant à celui du récepteur de géo-positionnement par satellite, GNSS,
- selon l'invention le module est configuré pour permettre le repositionnement du capteur de mouvements par des mesures angulaires ou de triangulation, de plusieurs points de références visibles de l'unité optronique et ayant des positions connues, lesdits points de référence étant notamment des amers, des constructions, des étoiles dans le ciel... de positions connues,
- le repositionnement du capteur de mouvements par des mesures angulaires ou de triangulation est effectué en l'absence de récepteur de géo-positionnement par satellite, GNSS, dans le module ou en cas d'indisponibilité dudit récepteur présent dans le module,
- le module est compact,
- le module occupe un volume inférieur à 20 000 cm3,
- le module occupe un volume supérieur à 1000 cm3,
- le module présente les dimensions typiques suivantes 35cmx25cmx12cm,
- le module a un poids inférieur à 5 kg
- le module a un poids supérieur à 1000 g,
- le module est configuré afin de permettre une visée de pointage rapide, de l'ordre d'une fraction d la seconde, pour obtenir les informations sur la position de la cible,
- le module est configuré en forme de jumelles,
- le module est configuré en forme de fusil ou présente l'apparence d'une arme de poing,
- le module peut être assemblé et fixé de façon rigide sur un équipement ou une arme,
- l'équipement est une arme portable,
- l'arme portable est une arme de trait,
- l'arme portable est une arme à feu,
- l'arme portable est un générateur de rayonnement électromagnétique,
- l'arme portable est un générateur de rayon laser.

L'invention concerne également un système constitué d'un module autonome de pointage visuel fixé sur un équipement portable, lequel module est selon l'invention décrite et l'équipement portable est une arme portable, ladite arme étant destinée à au moins neutraliser à distance un objectif ciblé.

Grâce à l'utilisation d'une centrale de navigation, le système portable autonome permet de déterminer le cap et dans des versions évoluées les coordonnées de position de la cible en un temps très réduit, typiquement en moins d'une fraction de seconde. Cela permet également de pouvoir effectuer une navigation/déplacement avec le système pendant plusieurs heures sans avoir besoin de le repositionner/recalibrer fréquemment sur une station dédiée dans le cas où le module ne comporte pas de récepteur de géo-positionnement par satellite, GNSS. De préférence, le capteur de mouvements ne comporte pas de partie en mouvement dans les gyromètres car ils sont à fibre optique, et le système peut ainsi être « durci » et rendu « tout-terrain ». Si le système/module est utilisé en mode inertiel pur, soit que le module ne comporte pas de récepteur de géo-positionnement par satellite, GNSS, ou que ses signaux soient indisponibles s'il en comporte un, alors il est nécessaire de réaliser des repositionnements/recalibrages régulièrement afin de restaurer les performances de cap de la centrale inertielle de navigation, INS, ou de la centrale de référence d'assiette et de cap, AHRS.

L'invention peut se présenter sous plusieurs formes dont un module adjoint à un fusil ou à un pistolet ou à une mitrailleuse par l'intermédiaire d'un rail Picatinny par exemple, ou se présenter déjà intégrée à un fusil ou à un pistolet pour faciliter sa prise en main. Dans une variante, le module est installé sur un équipement qui n'est pas une arme. En particulier le module peut être installé sur un équipement qui est simplement un support du module et qui peut servir à viser une cible, et a une forme générale de fusil ou équivalent ou de pistolet ou équivalent. Le système constitué du module et de l'équipement peut donc avoir d'autres fonctions que de simplement produire des informations de position de la cible visée et, notamment, permettre de tirer des projectiles dans le cas d'un équipement de type arme à feu. Le module, du fait de la possibilité de transmission à distance des informations sur la position absolue ou relative de la cible peut servir à commander l'orientation d'appareil situés à distance du module. Par exemple, un caméraman peut filmer le départ d'une fusée cible avec une caméra comportant le module et le module peut transmettre le positionnement de la fusée à d'autres caméra s'orientant automatiquement sur la fusée et qui sont disposées à d'autres emplacement pour observer la fusée selon divers angles.

### Brève description des dessins

La figure 1 schématise un premier exemple de module selon l'invention comportant un moyen de fixation amovible sur un fusil d'assaut,
La figure 2 schématise un deuxième exemple de module selon l'invention comportant un moyen de fixation amovible sur un fusil d'assaut,
La figure 3 représente l'application d'un module selon l'invention dans un système dédié ayant la forme d'un fusil,
La figure 4 schématise de façon générique les interconnexions entre les différents éléments principaux du module, et
La figure 5 représente un module selon l'invention se présentant sous la forme de jumelles pouvant être fixé sur un fusil.

### DESCRIPTION DETAILLEE

La description qui va suivre en regard des dessins annexés, donnés à titre d'exemples non limitatifs, fera bien comprendre en quoi consiste l'invention et comment elle peut être réalisée.

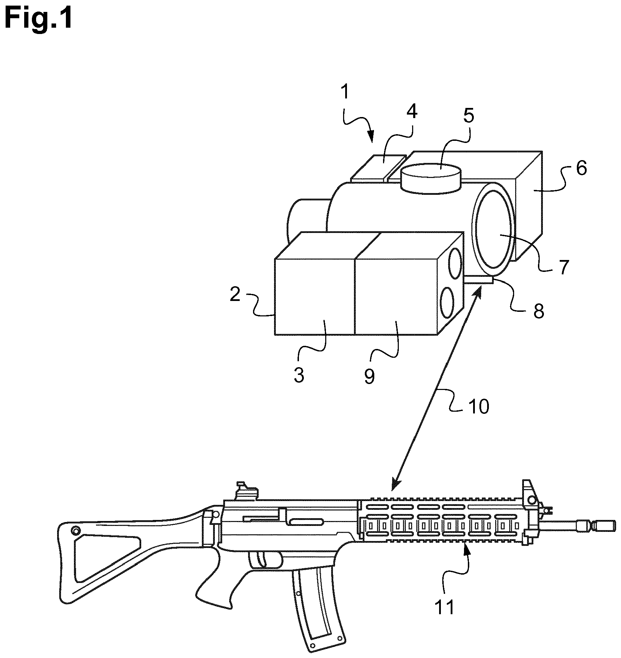

Dans le premier exemple de la figure 1, le module 1 de pointage est doté d'un dispositif de fixation 8 rapide permettant de le monter rapidement et avec précision sur un équipement portable qui est ici un fusil d'assaut 11, le montage étant symbolisé par la flèche 10 entre le module 1 et un fusil d'assaut 11. Ce dispositif de fixation 8 est compatible avec un rail de type rail Picatinny. Le dispositif de fixation 8 permet ainsi une fixation rapide et précise du module sur une arme ou sur tout autre équipement prééquipé d'un rail Picatinny ou que l'on aura équipé d'un tel rail pour pouvoir y fixer le module. Le dispositif de fixation 8 peut en outre comporter des moyens mécaniques d'ajustement pour que la visée du module permette d'utiliser le module comme un moyen de visée propre de l'arme ou équivalent.

La batterie 3 rechargeable alimente le module 1 afin de le rendre autonome énergétiquement. La caméra 7 ici infra-rouge, permet de visualiser la cible et son environnement de jour comme de nuit. Un réticule permet de définir une ligne de visée de référence de la cible dans le champ d'observation de la caméra 7. La caméra 7 infra-rouge peut être refroidie ou non refroidie. La caméra 7 infra-rouge peut permettre une observation dans les bandes SWIR, MWIR et/ou LWIR.

Le module 1 comporte une centrale inertielle de navigation 6, INS, hybridée avec un récepteur de géo-positionnement par satellite 5, GNSS, et qui permettent, dans des circuits électroniques formant calculateur 4, de calculer en permanence la position du module 1 et la direction ou cap de la cible. Le récepteur de géo-positionnement par satellite 5 peut être du type GPS.

La centrale inertielle de navigation, INS, comporte des moyens de calcul internes notamment avec un filtre de Kalman et des moyens d'échange de données avec d'autres capteurs et en particulier pour recevoir des données de positionnement produites par le récepteur de géo-positionnement par satellite 5, GNSS. Du fait de la combinaison des données de la centrale inertielle de navigation, INS, 6 et du récepteur de géo-positionnement par satellite 5, GNSS, ainsi que d'autres données d'autres capteurs (par ex. un podomètre, des accéléromètres...) et de l'utilisation d'un filtre de Kalman, les informations de position calculées restent optimales pour pratiquement toutes les conditions de fonctionnement rencontrées, par ex. en cas de perte de signal GNSS il est possible de continuer à obtenir des informations de position même si elles sont moins précises que si tous les capteurs continuaient à fonctionner.

La centrale inertielle qui est mise en oeuvre, de préférence de type FOG, a des dimensions inférieures à 100mm x 100mm x 100mm et les boucles de fibres optiques ont des diamètres de 50 mm ou moins. Cette centrale inertielle est hybridée à un récepteur de géo-positionnement par satellite ou « Global Navigation Satellite System » (GNSS). La centrale inertielle a un niveau d'incertitude inférieur ou égal à 2 mrad rms pour le cap et pour la position un niveau de précision correspondant à celui du récepteur de géo-positionnement par satellite.

Si le signal du récepteur de géo-positionnement par satellite 5 est reçu nominalement, la précision de la position du module 1 est connue à moins de 5m. Avec une centrale inertielle de navigation 6 INS de type FOG à base de bobine de fibre optique de 50mm de diamètre, le cap est connu à mieux que 2 mils. En cas de perte du signal du récepteur de géo-positionnement par satellite 5 et en mode « inertiel pur », les valeurs de cap et de position de l'opérateur fournie par le module 1 seront dégradées d'autant plus que la durée de perte du signal est longue ou que le module 1 a été déplacé pendant ce temps.

Le module 1 comporte également un télémètre laser 9 qui, lorsqu'il est activé dans la direction de la cible, permet de déterminer la distance module-cible. Il existe donc un moyen d'activation du télémètre 9 dans cet exemple de réalisation.

Un calculateur 4 permet de calculer des informations sur la position absolue ou relative de la cible et qui sont restituables à l'opérateur, dont les coordonnées de la position de la cible, à partir de données de position du module, de cap à la cible et de distance à la cible.

Le module met en oeuvre au moins un filtre de Kalman pour traiter les données provenant des divers capteurs (gyromètres, accéléromètres, récepteur de géo-positionnement par satellite, podomètre...) disponibles dans la version considérée du module (à INS ou à AHRS, avec ou non un récepteur de géo-positionnement par satellite, avec ou non un podomètre...). Le filtre de Kalman peut être implémenté dans la centrale inertielle de navigation, INS, ou dans la centrale de référence d'assiette et de cap, AHRS, et/ou, dans les moyens de calcul des circuits électroniques de pilotage, de calcul et d'interfaçage, ces derniers étant reliés aux divers capteurs du module pour en récupérer les données produites et les traiter.

Ainsi, par exemple, la mise en oeuvre d'un filtre de Kalman dans la centrale inertielle de navigation, INS, permet de mutualiser les avantages de la centrale INS et du récepteur GNSS : la possible lente dérive de la centrale INS peut être corrigée par les données du récepteur GNSS et en cas de perte des données du récepteur GNSS, les informations de position peuvent continuer à être calculées grâce à la seule centrale INS. A titre illustratif, si les données du récepteur GNSS sont de bonne qualité, ce seront principalement les données du récepteur GNSS qui seront utilisée pour déterminer les informations sur la position. Si les données du récepteur GNSS deviennent indisponibles, la centrale INS permet de continuer à fournir une information de position dont la qualité se dégradera au fur et à mesure de la durée de la perte du flux de données GNSS. Dans cet exemple, les informations sur la position peuvent être absolues et continuer à être absolues malgré la perte du flux des données GNSS.

En revanche, dans le cas où le capteur de mouvements et une centrale de référence d'assiette et de cap, AHRS, la bonne réception des données GNSS est indispensable pour bénéficier d'informations de position absolue puisque ces dernières ne sont produites que par le récepteur GNSS, la centrale AHRS ne pouvant y suppléer. Toutefois, en cas de perte du flux de données GNSS, le module peut permettre de donner le cap grâce à la centrale AHRS et la distance à la cible si le télémètre est installé dans le module. Dans ce dernier cas, l'information de position de la cible est relative et elle est donc fournie par référence/apport au module. Ainsi, dans le cas où le capteur de mouvements et une centrale de référence d'assiette et de cap, AHRS, les informations sur la position de la cible peuvent basculer entre des positions absolues (données GNSS disponibles) ou relatives (données GNSS indisponibles).

A noter que si la centrale inertielle de navigation n'est pas hybridée avec un capteur de vitesse quelconque, elle va subir une dérive au cours des déplacement du module. Dans un tel cas, il est préférable de recaler régulièrement le module. Il est également possible de réaliser des mises à jour à vitesse nulle ou ZUPT (« Zéro velocity UPdaTe ») régulières.

L'information sur la position de la cible peut donc être absolue ou relative et elle peut donc correspondre à une ou plusieurs de : les coordonnées de position de la cible, la distance de la cible au module, les coordonnées de position du module, le cap de la cible. Cette ou ces informations sont restituées à l'opérateur sur un afficheur ou écran de visualisation 2 qui permet en plus de visualiser la scène avec la cible, la ligne de visée présentée sous forme d'un réticule, une ou les informations utiles dont la position, le cap, la distance ainsi que les coordonnées de la cible pour un module comportant un récepteur de géo-positionnement par satellite, GNSS ou GPS et un télémètre.

Ces informations sont restituées à l'opérateur directement sur le module ou à distance par liaison filaire ou sans fil, par exemple sur des lunettes « connectées » ce qui permet à l'opérateur de visualiser la scène, la cible, la ligne de visée (réticule), l'information de position, de cap, de distance ainsi que les coordonnées de la cible en même temps.

Dans une variante, le télémètre 9 qui est à laser permet en outre de fournir la vitesse relative de la cible.

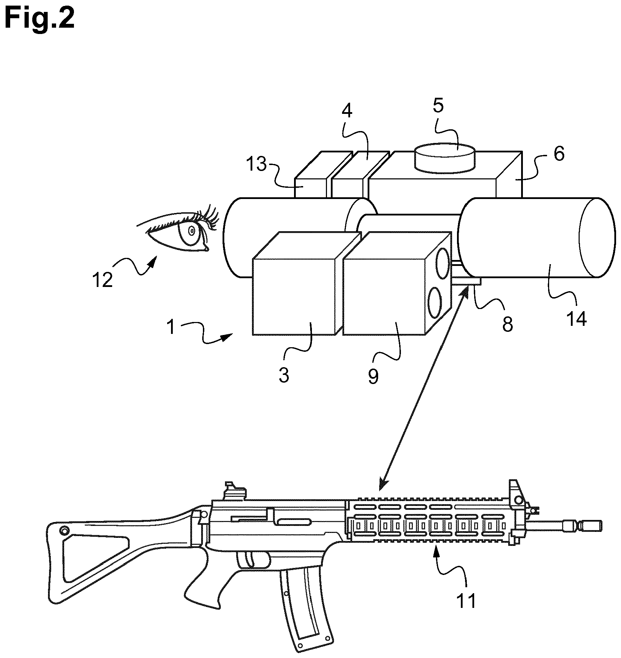

Dans une variante de réalisation représentée figure 2, une lunette optique directe 14 permet à l'opérateur 12 de visualiser la cible et son environnement de jour. Un réticule permet de définir une ligne de visée de référence de la cible dans le champ d'observation de la lunette 14. La centrale inertielle de navigation 6 hybridée avec un récepteur de géo-positionnement 5, par ex. GPS, permet au calculateur 4 de calculer en permanence la position du module et le cap de la cible. Dans ce cas où il n'y a pas de caméra, les informations restituées à distance ne comportent pas d'images de la cible, la cible étant seulement visible en direct dans le module par l'intermédiaire de la lunette optique directe 14. On peut prévoir de restituer les informations calculées par le calculateur dans la lunette optique directe par un système d'affichage direct, par ex. un écran à cristaux liquides, ou par injection grâce à un prisme ou une lame d'injection d'informations lumineuses à travers lequel on peut voir la cible. Comme précédemment, le module 1 de la figure 2 comporte un dispositif de fixation compatible avec un rail Picatinny permettant de monter rapidement et précisément le module sur un équipement portable qui est ici un fusil d'assaut 11.

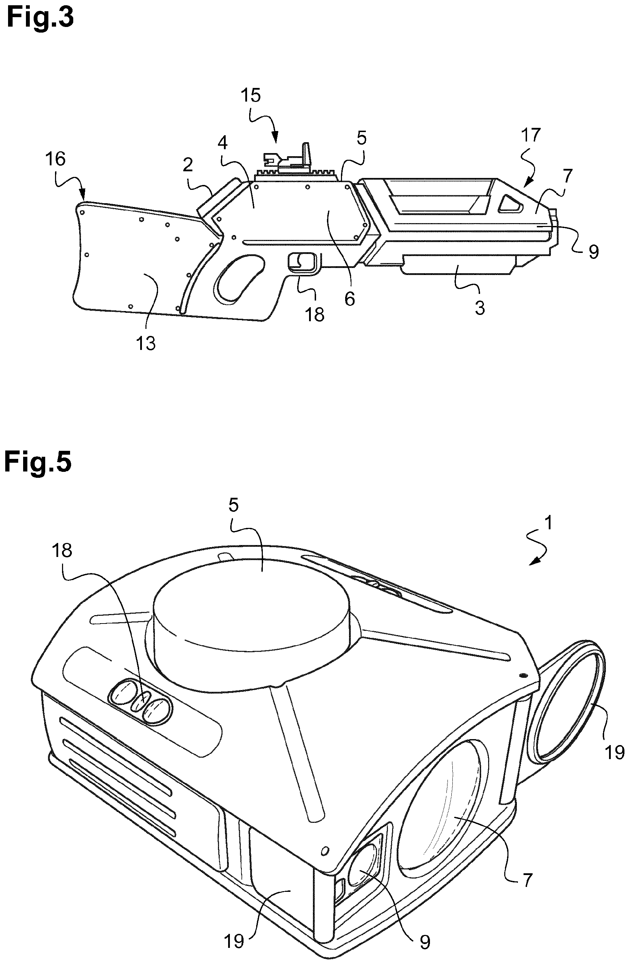

Dans encore une autre une variante de réalisation représentée figure 3, le module a été incorporé dans un équipement imitant une arme et qui ne sert qu'à permettre un pointage de cible et à obtenir des informations sur la position de la cible. On peut même considérer que c'est le module qui est en forme d'imitation d'arme. Dans ce dernier cas, le module n'a pas besoin nécessairement d'un dispositif de fixation à un équipement. Le module de pointage peut donc prendre la forme d'un fusil d'assaut comme sur la figure 3, ou d'une arme de poing, ou de jumelles, qui intègrent notamment les modules inertiels et de vision.

Le module en forme de fusil d'assaut 15 de la figure 3 comporte une partie arrière 16 adaptée à être épaulée et une partie avant 17. Les éléments constituant le module en forme de fusil d'assaut 15 de la figure 3 sont répartis en son sein de manière à l'équilibrer. Ainsi, la batterie 3 qui alimente le module afin de le rendre autonome énergétiquement est disposée vers l'avant 17 à la partie inférieure. La caméra infra-rouge 7 qui permet de visualiser la cible et son environnement de jour comme de nuit est disposée vers l'avant 17 à la partie supérieure. Si un télémètre laser 9 est installé comme dans cet exemple, il l'est aussi vers l'avant 17 et à la partie supérieure du module 15.

Un réticule permet de définir une ligne de visée de référence de la cible dans le champ d'observation de la caméra infra-rouge 7. La caméra infra-rouge 7 peut être refroidie ou non refroidie. La caméra infra-rouge 7 peut permettre une observation dans les bandes SWIR, MWIR et/ou LWIR. La centrale de navigation hybridée avec un récepteur GPS permet de calculer en permanence la position de l'opérateur et le cap de la cible.

Le module en forme de fusil d'assaut 15 comporte également un récepteur de géo-positionnement par satellite 5 ici GNSS disposé en position intermédiaire le long du module et vers le haut. La centrale inertielle de navigation 6 est aussi disposé en position intermédiaire le long du module. Un module de radiocommunication 13, par exemple Wi-Fi^{®}, est également installé dans le module ainsi que le calculateur 4 qui permet le pilotage de l'ensemble des éléments du module, le calcul des informations à partir des données produites par les différents capteurs et l'interfaçage avec l'utilisateur. Pout l'interfaçage il est notamment prévu un afficheur ou écran de visualisation 2 pour restitution des informations calculées et/ou simplement acquises par les capteurs ainsi qu'une gâchette 18 par exemple destinée à déclencher des acquisitions et calculs d'informations lorsque l'opérateur a la cible en ligne de mire et veut obtenir les informations souhaitées la concernant. En alternative, la gâchette 18 peut par exemple servir à mettre en marche pour ce qui concerne l'acquisition de cible et arrêter le module ou simplement le mettre en marche si un arrêt temporisé automatique est prévu. Les acquisitions et calculs à la demande permettent de diminuer la consommation électrique du module.

Il est à noter que tant que module doit être utilisable pour le pointage de cible, il est nécessaire que certains des éléments du module continuent à fonctionner et notamment la centrale inertielle de navigation en particulier si on a des doutes sur la disponibilité du récepteur de géo-positionnement par satellite.

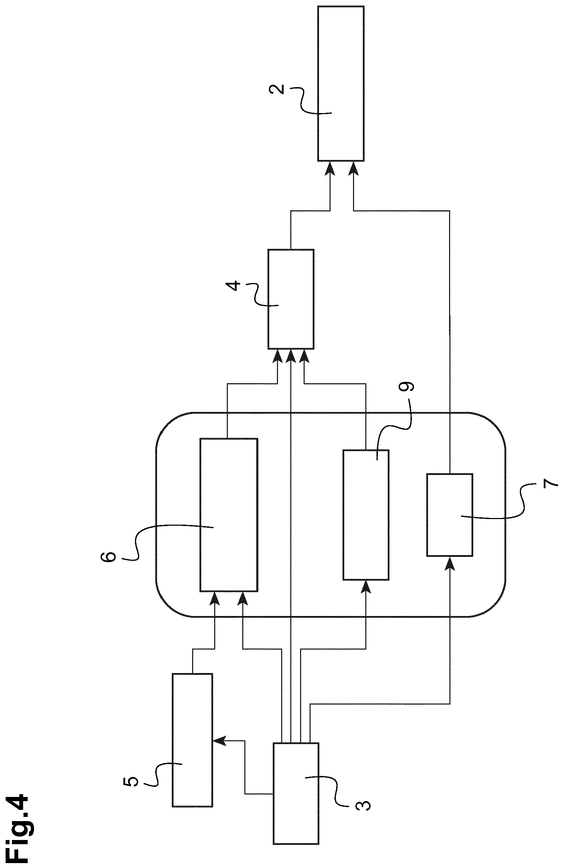

Les éléments principaux du module sont schématisés sur la figure 4 où l'on voit que la batterie 3 alimente le récepteur de géo-positionnement par satellite 5, la centrale inertielle de navigation 6, INS, le télémètre laser 9, la caméra 7, le calculateur 4 et l'écran de restitution par l'intermédiaire de la caméra 7 qui lui envoie du courant outre les données d'images. La centrale inertielle de navigation 6, INS, le télémètre laser 9 et la caméra 7 sont regroupés au sein d'une zone d'harmonisation opto-mécanique schématisée par une zone encadrée sur cette figure 4. Les données du récepteur de géo-positionnement par satellite 5 sont combinées à celles de la centrale inertielle de navigation 6 puis envoyées au calculateur 4. Le calculateur reçoit également des données du télémètre laser 9. On comprend que le module peut être configuré différemment pour ce qui concerne les échanges de données : le calculateur peut recevoir directement et séparément les données du récepteur de géo-positionnement par satellite 5, de la centrale inertielle de navigation 6 et du télémètre laser 9 et assurer l'hybridation.

Sur la figure 5, le module 1 est cette fois sous forme de jumelles pouvant être fixé sur un fusil ou sur un autre équipement portable. A la partie supérieure du module 1 est disposé le récepteur de géo-positionnement par satellite 5, GNSS. A l'avant du module 1, les éléments optiques sont visibles avec la caméra infra-rouge 7 et le télémètre laser 9 car leurs caches de protection 19 amovibles respectifs ont été ouverts. Pour déclencher les mesures et la fourniture d'informations sur la position de la cible visée, un bouton de commande 18 est accessible sur le module1.

On a donc vu qu'il est possible de réaliser le module de diverses manières et que les éléments qui le compose peuvent être choisis en fonction des besoins. De préférence, on réalise des modules avec INS afin de bénéficier des avantages de la centrale inertielle mais, dans d'autres versions, on peut se contenter d'utiliser à la place de l'INS, une centrale de référence d'assiette et de cap, AHRS.

## Revendications

1. Module (1) autonome de pointage visuel produisant des informations sur la position d'une cible visée par un utilisateur et destiné à être installé sur un équipement portable (11) afin de former un système portable et autonome à pointage visuel de cible, les informations sur la position de la cible étant au moins le cap de la cible, le module comportant :
- une alimentation électrique autonome (3),
- des circuits électroniques de pilotage, de calcul et d'interfaçage (4) avec l'utilisateur,
- un capteur de mouvements comportant une centrale inertielle de navigation, INS, (6) fournissant position et cap du module ou une centrale de référence d'assiette et de cap, AHRS, fournissant uniquement le cap,
- un récepteur de géo-positionnement par satellite, GNSS, (5) permettant de fournir en temps réel et en continu la position module ainsi que d'hybrider les capteurs inertiels,
- une unité optronique comportant un ensemble de capteurs optiques de type lunette (14) et/ou caméras (7) permettant de pointer visuellement le module sur la cible visée, et un télémètre (9) permettant de déterminer la distance entre la cible et le module,
**caractérisé en ce que** le capteur de mouvements comporte des gyromètres et des accéléromètres, et **en ce que** les gyromètres sont à résonnance hémisphérique, HRG, permettant de déterminer la direction du nord de façon autonome, et
dans lequel le module comporte en outre des moyens de repositionnement grâce à des mesures angulaires ou de triangulation de plusieurs points de références visibles de l'unité optronique et ayant des positions connues dans le cas où le récepteur de géo-positionnement par satellite, GNSS, ne permettrait pas de fournir la position du module.

2. Module (1) selon la revendication 1, **caractérisé en ce qu'**il comporte en outre un podomètre et **en ce que** la centrale inertielle de navigation, INS, ou la centrale de référence d'assiette et de cap, AHRS, est en outre hybridée avec le podomètre.

3. Module (1) selon la revendication 1 ou la revendication 2, **caractérisé en ce qu'**il comporte en outre un dispositif de fixation (8) permettant de fixer le module sur l'équipement portable (11) et **en ce que** le dispositif de fixation est configuré pour se fixer à un rail de fixation de l'équipement.

4. Module (1) selon l'une quelconque des revendications 1 à 3, **caractérisé en ce qu'**il comporte une lunette optique en vision directe par l'utilisateur et au moins une caméra de visualisation de la cible produisant des images, ladite au moins une caméra permettant une visualisation de la cible au moins de jour.

5. Module (1) selon la revendication 4, **caractérisé en ce que** ladite au moins une caméra (7) permet en outre une visualisation de la cible de nuit.

6. Module (1) selon la revendication 5, **caractérisé en ce que** le module comporte :
soit deux caméras, une première pour visualisation de cible de jour et une seconde pour visualisation de cible de nuit, la seconde caméra étant choisie parmi les caméra à intensification de lumière ou les caméras sensibles aux seuls infrarouges,
soit une seule caméra pour visualisation de cible de jour combinée à un illuminateur de cible permettant d'éclairer la cible la nuit afin de permettre sa visualisation,
soit une seule caméra sensible aux seuls infrarouges pour visualisation de cible de jour et de nuit.

7. Module (1) selon l'une quelconque des revendications 1 à 6, **caractérisé en ce que** qu'il comporte au moins une caméra (7) produisant des images de la cible visée et au moins un afficheur (2) permettant d'afficher lesdites images, ledit au moins un afficheur étant intégré au module et/ou déporté à distance du module.

8. Module (1) selon l'une quelconque des revendications 1 à 7, **caractérisé en ce qu'**il comporte un dispositif de communication de données sans fil (13) pour transmission des informations sur la position de la cible et des images de la cible visée dans le cas où le module comporte au moins une caméra (7).

9. Module (1) selon l'une quelconque des revendications1 à 8, **caractérisé en ce qu'**il a un niveau d'incertitude qui est inférieur ou égal à 2 mrad rms pour le cap et un niveau de précision pour la position correspondant à celui du récepteur de géo-positionnement par satellite, GNSS (5).

10. Module (1) selon l'une quelconque des revendications 1 à 9, **caractérisé en ce que** qu'il est d'un poids inférieur à cinq kilogrammes.

11. Système constitué d'un module (1) autonome de pointage visuel fixé sur un équipement portable (11), **caractérisé en ce que** le module est configuré selon l'une quelconque des revendications 1 à 10 et l'équipement portable (11) est une arme portable, ladite arme étant destinée à au moins neutraliser à distance un objectif ciblé.

## Patentansprüche

1. Autonomes Modul (1) zum visuellen Anpeilen, das Informationen über die Position eines von einem Nutzer angepeilten Ziels erzeugt und dazu bestimmt ist, auf einer tragbaren Ausrüstung (11) installiert zu werden, um ein tragbares und autonomes System zum visuellen Anpeilen eines Ziels zu bilden, wobei die Informationen über die Position des Ziels mindestens die Richtung des Ziels sind, wobei das Modul
- eine autonome Stromversorgung (3),
- elektronische Schaltkreise (4) zum Steuern, Rechnen und Bilden einer Schnittstelle mit dem Nutzer,
- einen Sensor zum Erfassen von Bewegungen mit einer Trägheitsnavigationszentrale INS (6), die die Position und die Richtung des Moduls liefert, oder mit einer Bezugszentrale für Basis und Richtung AHRS, die nur die Richtung liefert,
- einen Empfänger für satellitengestützte Positionsbestimmung GNSS (5), der ermöglicht, die Modulposition in Echtzeit und durchgehend zu liefern und die Trägheitssensoren hybrid zu machen,
- eine optronische Einheit, die eine Gesamtheit von optischen Sensoren vom Typ Fernglas (14) und/oder Kameras (7), die ermöglichen, das Modul visuell auf das angepeilte Ziel zu richten, und ein Telemeter (9), das ermöglicht, die Entfernung zwischen dem Ziel und dem Modul zu bestimmen, aufweist,
aufweist,
**dadurch gekennzeichnet, daß** der Bewegungssensor Kreisel und Beschleunigungsmesser aufweist und daß die Kreisel Kreisel mit Halbkugelresonanz HRG sind, die ermöglichen, die Nordrichtung autonom zu bestimmen, und
wobei das Modul außerdem Mittel zum Umpositionieren auf der Grundlage von Winkel- oder Triangulationsmessungen verschiedener, für die optronische Einheit sichtbarer Bezugspunkte mit bekannten Positionen aufweist, für den Fall daß der Empfänger für satellitengestützte Positionsbestimmung GNSS nicht ermöglicht, die Position des Moduls zu liefern.

2. Modul (1) gemäß Anspruch 1, **dadurch gekennzeichnet, daß** es außerdem ein Podometer aufweist und daß die Trägheitsnavigationszentrale INS oder die Bezugszentrale für Basis und Ausrichtung AHRS außerdem mit dem Podometer hybridisiert ist.

3. Modul (1) gemäß Anspruch 1 oder Anspruch 2, **dadurch gekennzeichnet, daß** es außerdem eine Befestigungsvorrichtung (8) aufweist, die ermöglicht, das Modul auf der tragbaren Ausrüstung (11) zu befestigen, und daß die Befestigungsvorrichtung dazu ausgelegt ist, auf einer Befestigungsschiene der Ausrüstung befestigt zu werden.

4. Modul (1) gemäß einem der Ansprüche 1 bis 3, **dadurch gekennzeichnet, daß** es ein optisches Fernrohr mit direkter Sicht des Nutzers und mindestens eine Zieldarstellungskamera, die Bilder erzeugt, aufweist, wobei die mindestens eine Kamera eine Darstellung des Ziels mindestens bei Tag ermöglicht.

5. Modul (1) gemäß Anspruch 4, **dadurch gekennzeichnet, daß** die mindestens eine Kamera (7) außerdem eine Darstellung des Ziels bei Nacht ermöglicht.

6. Modul (1) gemäß Anspruch 5, **dadurch gekennzeichnet, daß** das Modul
entweder zwei Kameras, eine erste zur Zieldarstellung bei Tag und eine zweite zur Zieldarstellung bei Nacht, wobei die zweite Kamera aus den Kameras mit Lichtverstärkung und den nur für Infrarot ausgelegten Kameras ausgewählt ist,
oder nur eine Kamera zur Zieldarstellung bei Tag in Kombination mit einer Zielbeleuchtung, die ermöglicht, das Ziel für dessen Darstellung bei Nacht zu beleuchten,
oder eine einzige Kamera, die nur für Infrarot empfindlich ist, für eine Zieldarstellung bei Tag und bei Nacht
aufweist

7. Modul (1) gemäß einem der Ansprüche 1 bis 6, **dadurch gekennzeichnet, daß** es mindestens eine Kamera (7), die Bilder des angepeilten Ziels liefert, und mindestens eine Darstellungsvorrichtung (2), die ermöglicht, die besagten Bilder darzustellen aufweist, wobei die mindestens eine Darstellungsvorrichtung entweder im Modul integriert ist oder in einem Abstand zum Modul angeordnet ist.

8. Modul (1) gemäß einem der Ansprüche 1 bis 7, **dadurch gekennzeichnet, daß** es eine drahtlose Datenübermittlungsvorrichtung (13) für die Übermittlung der Informationen über die Position des Ziels und, falls das Modul mindestens eine Kamera (7) aufweist, der Bilder des angepeilten Ziels aufweist.

9. Modul (1) gemäß einem der Ansprüche 1 bis 8, **dadurch gekennzeichnet, daß** es einen Unsicherheitsgrad, der geringer als oder gleich 2 mrad rms ist, und einen Genauigkeitsgrad für die Position, der dem des Empfängers für satellitengestützte Positionsbestimmung GNSS (5) entspricht, hat.

10. Modul (1) gemäß einem der Ansprüche 1 bis 9, **dadurch gekennzeichnet, daß** es ein Gewicht von weniger als fünf Kilogramm hat.

11. System, das aus einem autonomen Modul (1) zum visuellen Anpeilen, das auf einer tragbaren Ausrüstung (11) befestigt ist, besteht,
**dadurch gekennzeichnet, daß** das Modul gemäß einem der Ansprüche 1 bis 10 ausgelegt ist und daß die tragbare Ausrüstung (11) eine tragbare Waffe ist, wobei die Waffe dazu ausgelegt ist, ein angepeiltes Ziel mindestens zu neutralisieren.

## Claims

1. An autonomous visual pointing module (1) producing location information about a target aimed at by a user and intended to be installed on portable equipment (11) to form a portable and autonomous visual target pointing system, the target location information being at least the target heading, the module including:
- an autonomous power supply (3),
- control, calculation and user-interfacing electronic circuits (4),
- a motion sensor including an inertial navigation system, INS, (6) providing the module location and heading, or an attitude heading reference system, AHRS, providing only the heading,
- a satellite geolocation receiver, GNSS, (5) for providing the module location in real time and continuously, and for hybridizing the inertial sensors,
- an optronic unit including a set of optical sensors of the viewfinder (14) and/or camera (7) type, for visually pointing the module to the aimed-at target, and a rangefinder (9) for determining the distance between the target and the module,
**characterized in that** the motion sensor includes gyrometers and accelerometers, and **in that** the gyrometers are of the hemispherical-resonator, HRG, type, making it possible to autonomously determine the North direction and
**in that** the module further comprises repositioning means thanks to angular or triangulation measurements of several visible points of reference visible by the optronic unit and having known locations in the case the satellite geolocation receiver, GNSS, could not provide the module position.

2. Module (1) according to claim 1, **characterized in that** it further includes a pedometer and **in that** the inertial navigation system, INS, or the attitude heading reference system, AHRS, is further hybridized with the pedometer.

3. Module (1) according to claim 1 or claim 2, **characterized in that** it further includes an attachment device (8) for attaching the module to the portable equipment (11) and **in that** the attachment device is configured to be attached to an attachment rail of the equipment.

4. Module (1) according to any one of claims 1 to 3, **characterized in that** it includes a user direct-sight optical viewfinder and at least one target viewing camera producing images, said at least one camera allowing a viewing of the target at least in daylight.

5. Module (1) according to claim 4, **characterized in that** said at least one camera (7) further allows a viewing of the target by night.

6. Module (1) according to claim 5, **characterized in that** the module includes:
either two cameras, a first one for viewing the target in daylight and a second one for viewing the target by night, the second camera being chosen among the light-intensifying camera or the only infrared-sensitive cameras,
or a single camera for viewing the target in daylight combined with a target illuminator for lighting the target by night in order to allow its viewing,
or a single, only infrared-sensitive camera for viewing the target both in daylight and by night.

7. Module (1) according to any one of claims 1 to 6, **characterized in that** it includes at least one camera (7) producing images of the aimed-at target and at least one viewer (2) for displaying said images, said at least one viewer being integrated to the module and/or arranged remote from the module.

8. Module (1) according to any one of claims 1 to 7, **characterized in that** it includes a wireless data communication device (13) for transmitting the target location information and the images of the aimed-at target in the case where the module includes at least one camera (7).

9. Module (1) according to any one of claims 1 to 8, **characterized in that** it has a level of uncertainty that is lower than or equal to 2 mrad rms for the heading and a level of accuracy for the location corresponding to that of the satellite geolocation receiver, GNSS, (5).

10. Module (1) according to any one of claims 1 to 9, **characterized in that** it has a weight lower than five kilograms.

11. A system consisted of an autonomous visual pointing module (1) attached to portable equipment (11), **characterized in that** the module is configured according to any one of the claims 1 to 10 and the portable equipment (11) is a portable weapon, said weapon being intended to at least remotely neutralize a targeted objective.
